# EUROPEAN PATENT SPECIFICATION

(11) **EP 2 854 429 B1**
(45) Date of publication and mention of the grant of the patent: **13.11.2019**
(21) Application number: 13831923.1
(22) Date of filing: 08.04.2013
(51) Int. Cl.: H04M 3/42, H04M 3/48, H04M 3/493, H04M 3/54, H04W 4/12

(54) **TERMINAL DEVICE, INTERACTIVE VOICE RESPONSE DEVICE, MISSING CALL REMINDING SYSTEM AND METHOD**
ENDGERÄTEVORRICHTUNG, INTERAKTIVE SPRACHANTWORTVORRICHTUNG, SYSTEM UND VERFAHREN ZUR ERINNERUNG AN VERPASSTE ANRUFE
DISPOSITIF DE TERMINAL, DISPOSITIF DE RÉPONSE VOCALE INTERACTIVE, SYSTÈME ET PROCÉDÉ D'AIDE-MÉMOIRE POUR APPELS MANQUÉS

(43) Date of publication of application: 01.04.2015
(73) Proprietor: Huawei Technologies Co., Ltd., Longgang District Shenzhen, Guangdong 518129 (CN)
(72) Inventor: LI, Liang, Shenzhen, Guangdong 518129 (CN); YE, Wenwu, Shenzhen, Guangdong 518129 (CN)
(74) Representative: Goddar, Heinz J.
(86) International application number: PCT/CN2013/073870
(87) International publication number: WO 2014/166042

(56) References cited:
- WO-A1-2010/083886
- CN-A- 101 047 741
- CN-A- 101 227 741
- CN-A- 102 377 883
- US-A1- 2005 277 406
- US-A1- 2009 238 353
- US-B1- 6 678 533
- US-B2- 8 180 024

## Description

### TECHNICAL FIELD

The present invention relates to the field of computer and communications technologies, and in particular, to a terminal device, an interactive voice response device, and a missed call reminding system and method.

### BACKGROUND

A phone call is a main and very important manner of real-time communication between people nowadays. In this field, various services provided by telecom operators have basically fulfilled basic requirements of people. Due to importance of a phone call, the telecom operators also provide corresponding auxiliary services for a call that is not answered in time, for example, a missed call, a missed short message reminder/voice message, and the like. A missed call means that a mobile terminal user of an operator fails to receive an incoming call or short message notification (ringtone) when a device is powered off, a subscriber identity module (Subscriber Identity Module, SIM) card is damaged or abnormal, the subscriber identity module card is removed, the device is not in a service area, a roaming service is not activated, or in other non-normal service states, and the terminal device has no relevant call record. However, such services have an obvious defect: the services are available only when the user uses the terminal device to register the subscriber identity module card on the network again.

However, with development of terminal technologies, more terminals support dual-card dual-standby or even more cards on one device. The probability that one of the cards is unavailable (temporarily unavailable, for example, when the card is removed) increases significantly. In addition, the industry been exploring service products related to a virtual subscriber identity module card (primarily applicable to mobile data services). Limited by current terminal technologies, such products also cause an original entity subscriber identity module card of the operator to be unable to provide services normally in a time period. However, in this case, data channels of most users are still available in fact, or a data network is accessed by using WIFI or using a local subscriber identity module card in a roaming area. However, none of solutions in the prior art can notify the user of a missed call in time.

WO 2010/083886 A1 discloses a method and a system for addressing a mobile terminal. A telecommunication network is provided that allows using a IMEI of a mobile terminal as destination or identification instead of the regular IMSI or MSISDN. This capability of the network is provided by maintaining a set of coupled pairs of IMEI and IMSI/MSISDN.

US 6 678 533 B1 discloses a method for connecting an incoming call in a wireless telecommunication installation to a dual mode terminal. A terminal apparatus can be operated as a wireless terminal apparatus of a wireless communication device and as a mobile radio telephone terminal apparatus of a mobile radio telephone network under the prediction that the current availability of the terminal apparatus in the mobile radio telephone network and/or in the wireless communication device is stored in both systems.

US 2009/0238353 A1 discloses a caller that is presented with the state of the call as detected by the network, along with a number of potential options.

US 2005/0277406 A1 discloses a system and a method for facilitating enhanced call awareness. The system may include an interface that receives a signal associated with a call to a telephone number. A call information engine may be coupled to the interface and may recognize that a party of the call subscribes to an enhanced call activity service.

### SUMMARY

Embodiments of the present invention provide a terminal device, an interactive voice response device, and a missed call reminding system and method to solve a problem in the prior art that a missed call to a user account cannot be sent to the terminal device in time in a case that the user account is unavailable but the terminal device is available.

To solve the foregoing technical problem, the embodiments of the present invention disclose the following technical solutions:

A first aspect provides a terminal device according to claim 1.

In a first possible implementation manner of the first aspect, the information about the binding between the user account and the terminal device includes mapping relationships between all user accounts that use the terminal device and the terminal device identifier.

In a second possible implementation manner of the first aspect, the missed call receiving unit includes a user identity recognizing unit, configured to receive missed call reminders that are sent by the interactive voice response device to other user accounts except the called user account in the terminal device by using a short message gateway.

In a third possible implementation manner of the first aspect, the information about the binding between the user account and the terminal device further includes at least either of a mapping relationship between the terminal device identifier and an instant messaging application and a mapping relationship between the terminal device identifier and a push service.

In a fourth possible implementation manner of the first aspect,
the missed call receiving unit includes an instant messaging application unit, configured to receive a missed call reminder that is sent by the interactive voice response device to the terminal device by using an instant messaging server.

In a fifth possible implementation manner of the first aspect, the missed call receiving unit includes a push application unit, configured to receive a missed call reminder that is sent by the interactive voice response device to the terminal device by using a push server.

In a sixth possible implementation manner of the first aspect, the forwarding setting unit binds the configuration information for missed call forwarding of the user account onto a preset service number of the interactive voice response device by dialing a specific service of an operator.

A second aspect provides an interactive voice response device according to claim 5.

In a first possible implementation manner of the second aspect, the information about the binding between the user account and the terminal device includes mapping relationships between all user accounts that use the terminal device and the terminal device identifier.

In a second possible implementation manner of the second aspect, the message sending unit includes:
a short message gateway interface unit, configured to use the short message gateway to send the call information to other user accounts bound to the terminal device except the called account in the terminal device.

In a third possible implementation manner of the second aspect, the information about the binding between the user account and the terminal device further includes at least either of a mapping relationship between the terminal device and an instant messaging application and a mapping relationship between the terminal device and a push service.

In a fourth possible implementation manner of the second aspect, the message sending unit includes:
an instant messaging interface unit, configured to use an instant messaging server to send the call information to an instant messaging application in the terminal device.

In a fifth possible implementation manner of the second aspect, the message sending unit includes:
a push service interface unit, configured to use a push server to send the call information to a push application in the terminal device.

In a sixth possible implementation manner of the second aspect, the interactive voice response device further includes a voice recording unit and a voice converting unit, where the voice recording unit is configured to record a voice message that is left in time of calling; the voice converting unit is configured to convert the voice message into text information; and the message sending unit sends at least either of the voice message and the text information together with the call information as a missed call reminder to the terminal device bound to the called user account.

A third aspect provides a missed call reminding system, including a service server, a terminal device described in any one of the foregoing items and an interactive voice response device described in any one of the foregoing items, where the terminal device and the interactive voice response device are connected to the service server over an operator network.

In a first possible implementation manner of the third aspect, the service server includes a short message gateway, an instant messaging server, and a push server.

A fourth aspect provides a missed call reminding method according to claim 11.

In a first possible implementation manner of the fourth aspect, the information about the binding between the user account and the terminal device includes mapping relationships between all user accounts that use the terminal device and the terminal device identifier.

In a second possible implementation manner of the fourth aspect, the receiving, by the terminal device, a missed call reminder sent by the interactive voice response device according to the information about the binding, where the missed call reminder is a reminder of a missed call to the user account, specifically includes:
receiving missed call reminders that are sent by the interactive voice response device to other user accounts except the called user account in the terminal device by using a short message gateway.

In a third possible implementation manner of the fourth aspect, the information about the binding between the user account and the terminal device further includes at least either of a mapping relationship between the terminal device identifier and an instant messaging application and a mapping relationship between the terminal device identifier and a push service.

In a fourth possible implementation manner of the fourth aspect, the receiving, by the terminal device, a missed call reminder sent by the interactive voice response device according to the information about the binding, where the missed call reminder is a reminder of a missed call to the user account, specifically includes:
receiving, by an instant messaging application in the terminal device, a missed call reminder that is sent by the interactive voice response device to the terminal device by using an instant messaging server.

In a fifth possible implementation manner of the fourth aspect, the receiving, by the terminal device, a missed call reminder sent by the interactive voice response device according to the information about the binding, where the missed call reminder is a reminder of a missed call to the user account, specifically includes:
receiving, by a push application in the terminal device, a missed call reminder that is sent by the interactive voice response device to the terminal device by using a push server.

In a sixth possible implementation manner of the fourth aspect, the terminal device binds the configuration information for missed call forwarding of the called user account onto a preset service number of the interactive voice response device by dialing a specific service of an operator.

A fifth aspect provides a missed call reminding method according to claim 14.

In a first possible implementation manner of the fifth aspect, the information about the binding between the user account and the terminal device includes mapping relationships between all user accounts that use the terminal device and the terminal device identifier.

In a second possible implementation manner of the fifth aspect, the sending, by the interactive voice response device, call information as a missed call reminder to a terminal device corresponding to the terminal device identifier, specifically includes:
using a short message gateway to send the call information to other user accounts bound to the terminal device except the called account in the terminal device.

In a third possible implementation manner of the fifth aspect, the information about the binding between the user account and the terminal device further includes at least either of a mapping relationship between the terminal device and an instant messaging application and a mapping relationship between the terminal device and a push service.

In a fourth possible implementation manner of the fifth aspect, the sending, by the interactive voice response device, call information as a missed call reminder to a terminal device corresponding to the terminal device identifier, specifically includes:
using an instant messaging server to send the call information to an instant messaging application in the terminal device.

In a fifth possible implementation manner of the fifth aspect, the sending, by the interactive voice response device, call information as a missed call reminder to a terminal device corresponding to the terminal device identifier, specifically includes:
using a push server to send the call information to a push application in the terminal device.

In a sixth possible implementation manner of the fifth aspect, before the sending, by the interactive voice response device, call information as a missed call reminder to a terminal device bound to the called user account, the method further includes: recording a voice message that is left in time of calling, and converting the voice message into text information; and, in time of sending, sending at least either of the voice message and the text information together with the call information as a missed call reminder to the terminal device bound to the called user account.

With the terminal device, the interactive voice response device, and the missed call reminding system and method provided in the embodiments of the present invention, in the interactive voice response device, all user accounts that use the terminal device are bound to the terminal device, and, based on an operator's call forwarding service, experience of a missed call reminding service that is previously not accomplishable by the operator is provided by the interactive voice response device for a terminal user when a user account is unavailable but the terminal device is still available (for example, a corresponding subscriber identity module card is removed), and the missed call to a user account can be sent to the terminal device in time.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of a terminal device according to the present invention;
FIG. 2 is a schematic structural diagram of an interactive voice response device according to the present invention;
FIG. 3 is a schematic structural diagram of a missed call reminding system according to the present invention;
FIG. 4 is a flowchart for a terminal device side in a missed call reminding method according to the present invention;
FIG. 5 is a flowchart for an interactive voice response device side in a missed call reminding method according to the present invention;
FIG. 6 is a specific implementation flowchart of a missed call reminding method according to the present invention;
FIG. 7 is another specific implementation flowchart of a missed call reminding method according to the present invention; and
FIG. 8 is a schematic structural diagram of hardware of an interactive voice response device according to the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

In the embodiments of the present invention, terminal devices include but are not limited to mobile communications devices such as a mobile phone, a personal digital assistant (Personal Digital Assistant, PDA), a tablet, and a portable device (such as a portable computer), which are not limited by the embodiments of the present invention.

The following describes specific implementation manners of the present invention in more detail with reference to accompanying drawings and embodiments. The following embodiments are used to describe the present invention but are not intended to limit the scope of the present invention.

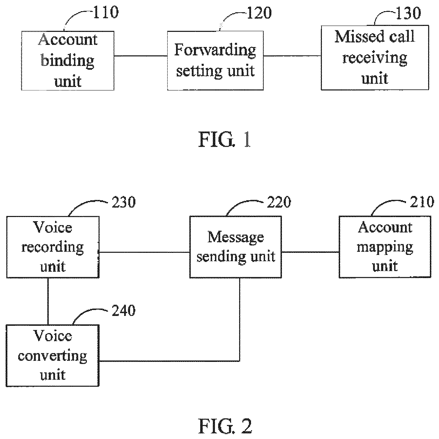

Embodiment 1 of the present invention provides a terminal device. As shown in FIG. 1, the terminal device includes an account binding unit 110, a forwarding setting unit 120, and a missed call receiving unit 130. The account binding unit 110 is configured to send an account binding request to an interactive voice response (Interactive Voice Response, IVR) device, where the account binding request is a request for binding an user account to the terminal device, so as to enable the interactive voice response device to record information about the binding between the user account and the terminal device. The forwarding setting unit 120 is configured to bind configuration information for missed call forwarding of the user account onto a preset service number of the interactive voice response device. The configuration information is information about a corresponding call forwarding service registered by the user account with an operator. After the binding is performed, when the user number cannot be called, the call is forwarded to the service number, and then the interactive voice response device performs subsequent forwarding processing. The missed call receiving unit 130 is configured to receive a missed call reminder sent by the interactive voice response device according to the information about the binding, where the missed call reminder is a reminder of a missed call to the user account.

The terminal device may be a device such as a smartphone and a tablet, and the terminal device is uniquely identified by a device identifier (International Mobile Equipment Identity, IMEI). The user account is generally a mobile phone number, that is, a mobile station integrated services digital network number (Mobile Station Integrated Services Digital Network Number, MSISDN). One mobile phone may include multiple subscriber identity module cards, that is, may have multiple user accounts. The information about the binding between the user account and the terminal device includes mapping relationships between all user accounts that use the terminal device and a terminal device identifier. When a user handles a basic call service with the operator, the user account is bound to the subscriber identity module card beforehand. Therefore, the information about the binding between the user account and the terminal device further implicitly includes a mapping relationship between the subscriber identity module card number corresponding to the user account and the terminal device identifier. In time of requesting binding, the interactive voice response device is requested to bind all user accounts that use the terminal device and the subscriber identity module card number to the terminal device identifier, that is, enable the interactive voice response device to record the mapping relationships, where the mapping relationships may be stored in a manner of a relationship mapping table in the interactive voice response device.

When necessary (for example, before roaming), the user uses the forwarding setting unit 120 to dial a specific service of an operator (for example, China Telecom: dial *72+phone number to perform call forwarding unconditional; dial *720 to cancel; dial *90+phone number to perform call forwarding on busy; dial *900 to cancel; dial *92+phone number to perform call forwarding on no reply; dial *920 to cancel; and dial *730 to cancel all forwarding) so that the forwarding configuration information of calls that call the user account is bound onto the corresponding service number of the interactive voice response device.

The missed call receiving unit 130 may be a user identity recognizing unit. After the forwarding is set, the user identity recognizing unit receives missed call reminders that are sent by the interactive voice response device to other user accounts except the called user account in the terminal device by using a short message gateway. In a case that a subscriber identity module card on the terminal device is unavailable (for example, no roaming service is activated), when a first user account corresponding to the subscriber identity module card is called, the call is forwarded to the interactive voice response device. According to the mapping relationship in the information about the binding between the user account and the terminal device, the interactive voice response device finds a second user account corresponding to another subscriber identity module card bound to the terminal, and sends call information (generally including information such as call time and a caller user account) as a missed call reminder to the terminal device by using a short message gateway on an operator network side and using the second user account, so as to remind the user in time. The missed call receiving unit 130 of the terminal device may be a user identity recognizing unit, and the user identity recognizing unit receives the missed call reminder that is sent by using the second user account and related to the first user account.

In this embodiment, all user accounts that use the terminal device are bound to the terminal device beforehand in the interactive voice response device. When one of the user accounts is unavailable, the missed call reminder of the unavailable user account is sent to the terminal device by using another user account bound to the terminal device, so that the missed call to the unavailable user account can be sent to the terminal device in time.

When the terminal device provides only one subscriber identity module card slot or the subscriber identity modules in multiple slots are all unavailable, the interactive voice response device is unable to send the missed call information to the terminal device in time, and the user identity recognizing unit is unable to receive the missed call information of a certain user account from the interactive voice response device in time.

Further, the information about the binding between the user account and the terminal device further includes at least either of a mapping relationship between the terminal device and an instant messaging (Instant Messenger, IM) application installed in the terminal device and a mapping relationship between the terminal device and a push (PUSH) service installed in the terminal device, which may be stored in a manner of a relationship mapping table in the interactive voice response device. For example, the mapping table may include: mapping relationships between all user accounts that use the terminal device and the terminal device identifier, and a mapping relationship between the corresponding subscriber identity module card number of the user account and the terminal device identifier, a mapping relationship between the terminal device identifier and the instant messaging application, and a mapping relationship between the terminal device identifier and the push service. When the terminal device provides only one subscriber identity module slot or the subscriber identity modules in multiple slots are all unavailable, the interactive voice response device may find the instant messaging application or the push application in the terminal device corresponding to the called user account according to the mapping relationship between the terminal device identifier and the instant messaging application or the mapping relationship between the terminal device identifier and the push service, and send a missed call reminder to the terminal device by using the instant messaging application or the push application.

The missed call receiving unit 130 may also be an instant messaging application unit, configured to receive the missed call reminder that is sent by the interactive voice response device to the terminal device by using an instant messaging server on the operator network side.

The missed call receiving unit 130 may also be a push application unit, configured to receive the missed call reminder that is sent by the interactive voice response device to the terminal device by using a push server on the operator network side. For example, when the instant messaging application is offline, the missed call reminder that is sent by the interactive voice response device to the terminal device by using the push server on the operator network side is received. Of course, when the instant messaging application and the push application are online simultaneously, either of them may be selected to send the missed call reminder to the terminal device.

The terminal device in this embodiment enables the user to receive the missed call reminder in time, which improves user experience significantly.

Embodiment 2 of the present invention provides an interactive voice response device. As shown in FIG. 2, a structure of the interactive voice response device in the present invention includes an account mapping unit 210 and a message sending unit 220.

The account mapping unit 210 is configured to record information about binding between a user account and a terminal device after receiving an account binding request sent by the terminal device, and, in time of call forwarding, obtain, according to the information about the binding, a terminal device identifier bound to a called user account. The information about the binding between the user account and the terminal device includes mapping relationships between all user accounts that use the terminal device and a terminal device identifier, and also implicitly includes mapping relationships between corresponding subscriber identity module card numbers of all the user accounts that use the terminal device and the terminal device identifier.

The message sending unit 220 is configured to send call information as a missed call reminder to a terminal device corresponding to the terminal device identifier. In this embodiment, the message sending unit 220 may be a short message gateway interface unit, configured to use a short message gateway on an operator network side to send the call information to other bound user accounts except the called account in the terminal device. That is, another user account (such as a mobile phone number of another subscriber identity module card) stored in the account mapping unit 210 is used as a user identifier for interconnecting with the short message gateway, and a missed call reminder is sent to the another user account (that is, the another subscriber identity module card) bound to the terminal device corresponding to the called user account.

When the terminal device provides only one subscriber identity module card slot or the subscriber identity modules in multiple slots are all unavailable, the interactive voice response device is unable to send the missed call information to the terminal device in time, and the user identity recognizing unit is unable to receive the missed call information of a certain user account from the interactive voice response device in time.

Further, the information about the binding between the user account and the terminal device further includes either or both of a mapping relationship between the terminal device and an instant messaging application installed in the terminal device and a mapping relationship between the terminal device and a push service installed in the terminal device. When the terminal device provides only one subscriber identity module slot or the subscriber identity modules in multiple slots are all unavailable, the interactive voice response device may find the instant messaging application and the push application in the terminal device corresponding to the called user account according to the mapping relationships, and send a missed call reminder to the terminal device by using the instant messaging application or the push application.

The message sending unit 220 may also be an instant messaging interface unit, configured to use an instant messaging server on the operator network side to send the call information to the instant messaging application in the terminal device.

The message sending unit 220 may also be a push service interface unit, configured to use a push server on the operator network side to send the call information to the terminal device. For example, when the instant messaging application is offline, the push service interface unit uses the push server on the operator network side to send a missed call reminder to the terminal device.

To further improve user experience, the interactive voice response device generally further includes a voice recording unit 230 and a voice converting unit 240. The voice recording unit 230 is configured to record a voice message that is left in time of calling; and the voice converting unit 240 is configured to convert the voice message into text information. The message sending unit 220 sends both or either of the voice message and the text information together with the call information as a missed call reminder to the terminal device bound to the called user account. That is, in time of sending the missed call reminder, the voice message may be sent directly, or only the text information is sent, or both the voice message and the text information may be sent simultaneously.

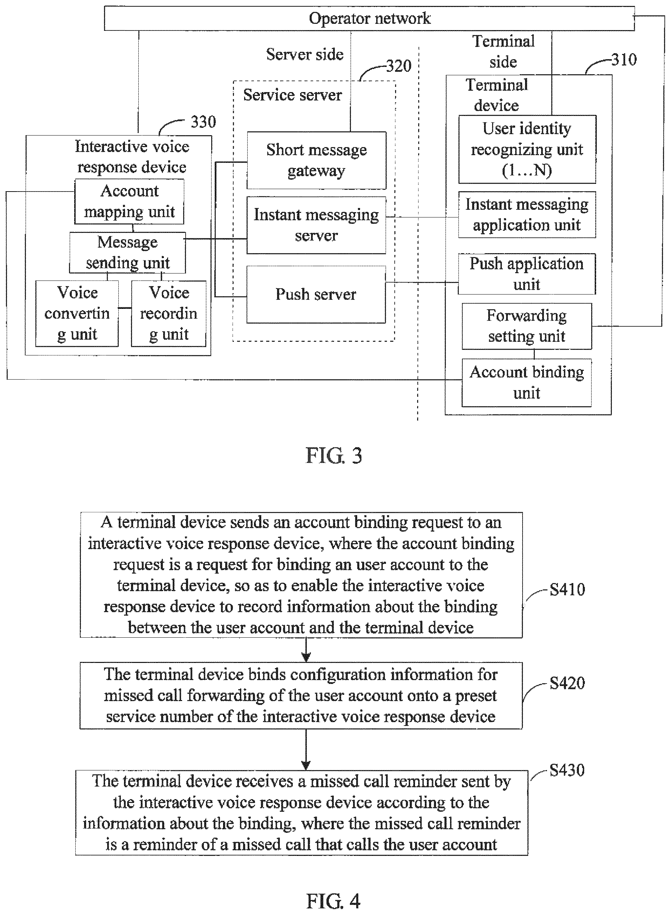

Embodiment 3 of the present invention provides a missed call reminding system. As shown in FIG. 3, the missed call reminding system includes a terminal device 310 located on a terminal side, and a service server 320 and an interactive voice response device 330 that are located on a service side. The terminal device 310 and the interactive voice response device 330 are connected to the service server 320 over an operator network. In this embodiment, the service server 320 may be a server that provides multiple service functions, and may also include multiple servers of different service functions, for example, a short message gateway, an instant messaging server, and a push server. The terminal device 310 is a terminal device in Embodiment 1, and includes an account binding unit, a forwarding setting unit, an instant messaging application unit, a push application unit, and multiple user identity recognizing units. The interactive voice response device 330 is the interactive voice response device in Embodiment 2, and includes an account mapping unit, a voice recording unit, a voice converting unit, and a message sending unit.

The account binding unit of the terminal device 310 sends an account binding request to the interactive voice response device 330, where the account binding request is a request for binding a user account to a terminal device. After receiving the request, the account mapping unit of the interactive voice response device 330 records information about the binding between the user account and the terminal device. By dialing a specific service number of an operator, the forwarding setting unit 120 of the terminal device 310 sets forwarding of calls to the user account so that the calls are forwarded to a preset service number corresponding to the interactive voice response device, that is, the calls are forwarded to the interactive voice response device 330.

When the interactive voice response device 330 receives a forwarded call sent by the operator network, the voice recording unit records a voice message. According to the recorded information about the binding between the user account and the terminal device, the account mapping unit obtains a terminal device identifier bound to the called user account. The voice converting unit may convert the voice message into text information as required. The message sending unit sends the voice message and/or text information as a missed call reminder to the terminal device bound to the called user account, and specifically, by using a short message gateway on the operator network side or an instant messaging server or a push server, sends the missed call reminder to the terminal device bound to the called user account.

Embodiment 4 of the present invention provides a missed call reminding method. As shown in FIG. 4, a specific procedure includes:
Step S410: A terminal device sends an account binding request to an interactive voice response device, where the account binding request is a request for binding a user account to the terminal device, so as to enable the interactive voice response device to record information about the binding between the user account and the terminal device.
Step S420: The terminal device binds configuration information for missed call forwarding of the user account onto a preset service number of the interactive voice response device.
Step S430: The terminal device receives a missed call reminder sent by the interactive voice response device according to the information about the binding, where the missed call reminder is a reminder of a missed call to the user account.

The information about the binding between the user account and the terminal device includes mapping relationships between all user accounts that use the terminal device and a terminal device identifier, and also implicitly includes mapping relationships between corresponding subscriber identity module card numbers of all the user accounts that use the terminal device and the terminal device identifier. In step S430, a specific manner of the receiving, by the terminal device, a missed call reminder sent by the interactive voice response device according to the information about the binding, where the missed call reminder is a reminder of a missed call to the user account, may be: receiving missed call reminders that are sent by the interactive voice response device to other user accounts bound to the terminal device except the called user account in the terminal device by using a short message gateway on an operator network side.

To further improve user experience, when all subscriber identity module cards in the terminal device are unavailable, the terminal device of the user can also receive a missed call reminder in time, and the information about the binding between the user account and the terminal device further includes at least either of a mapping relationship between the terminal device identifier and an instant messaging application and a mapping relationship between the terminal device identifier and a push service.

In step S430, a specific manner of the receiving, by the terminal device, a missed call reminder sent by the interactive voice response device according to the information about the binding, where the missed call reminder is a reminder of a missed call to the user account, may be: receiving, by an instant messaging application in the terminal device, a missed call reminder that is sent by the interactive voice response device to the terminal device by using an instant messaging server on an operator network side.

In step S430, a specific manner of the receiving, by the terminal device, a missed call reminder sent by the interactive voice response device according to the information about the binding, where the missed call reminder is a reminder of a missed call to the user account, may also be: receiving, by a push application in the terminal device, a missed call reminder that is sent by the interactive voice response device to the terminal device by using a push server on the operator network side.

In this embodiment, the terminal device binds the configuration information for missed call forwarding of the called user account onto a preset service number of the interactive voice response device by dialing a specific service of an operator.

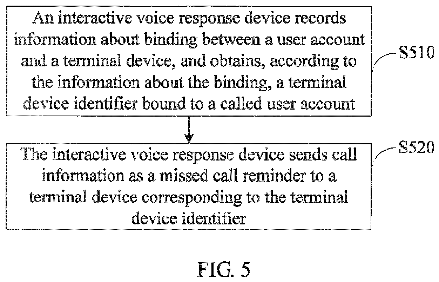

Embodiment 5 of the present invention provides a missed call reminding method. As shown in FIG. 5, the method includes:
Step S510: An interactive voice response device receives an account binding request sent by a terminal device, and records information about binding between a user account and a terminal device, and obtains, according to the information about the binding, a terminal device identifier bound to a called user account.
Step S520: The interactive voice response device sends call information as a missed call reminder to a terminal device corresponding to the terminal device identifier.

The information about the binding between the user account and the terminal device includes mapping relationships between all user accounts that use the terminal device and a terminal device identifier, and also implicitly includes mapping relationships between corresponding subscriber identity module card numbers of all the user accounts that use the terminal device and the terminal device identifier.

In step S520, a specific manner of the sending, by the interactive voice response device, call information as a missed call reminder to a terminal device corresponding to the terminal device identifier, may be: using a short message gateway on an operator network side to send the call information to other user accounts bound to the terminal device except the called account in the terminal device.

To further improve user experience, so that the interactive voice response device can also send a missed call reminder to the terminal device in time when all subscriber identity module cards in the terminal device are unavailable, the information about the binding between the user account and the terminal device further includes at least either of a mapping relationship between the terminal device and an instant messaging application installed in the terminal device and a mapping relationship between the terminal device and a reminder service installed in the terminal device.

In step S520, a specific manner of the sending, by the interactive voice response device, call information as a missed call reminder to a terminal device corresponding to the terminal device identifier, may be: using an instant messaging server on the operator network side to send the call information to an instant messaging application in the terminal device.

In step S520, a specific manner of the sending, by the interactive voice response device, call information as a missed call reminder to a terminal device corresponding to the terminal device identifier, may also be: using a push server on the operator network side to send the call information to a push application in the terminal device.
before the sending, by the interactive voice response device, call information as a missed call reminder to a terminal device bound to the called user account, the method further includes: recording a voice message that is left in time of calling, and converting the voice message into text information; and, in time of sending, sending both or either of the voice message and the text information together with the call information at this time as a missed call reminder to the terminal device bound to the called user account.

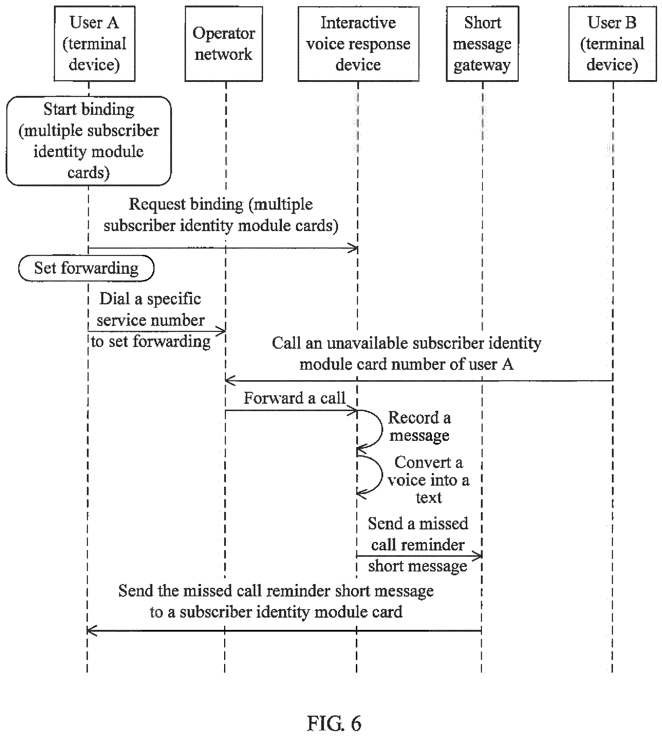

The present invention is further described by using the following two scenarios, as shown in FIG. 6.

User A uses an account binding unit on a terminal to perform user account binding (bind multiple user accounts to one terminal device identifier).

The account binding unit is linked to an interactive voice response device to complete the binding between the user account and the device.

User A uses a forwarding setting unit on the terminal to set call forwarding. The forwarding setting unit dials a specific service number of an operator to set forwarding of a call to a service number corresponding to the interactive voice response device.

In time of call forwarding, user B dials a mobile phone of user A, and, according to the call forwarding setting of user A, the operator forwards the call from user B to the interactive voice response device, and a voice recording unit of the interactive voice response device records a voice message of user B.

By querying the stored information about the binding between the user account and the terminal device, an account mapping unit of the interactive voice response device obtains an identity of user A and corresponding terminal mapping information.

A message sending unit of the interactive voice response device selects a channel for sending a reminder to the user's mobile phone. Specifically, a voice converting unit of the interactive voice response device converts the user message into text, and the message sending unit of the interactive voice response device uses a short message to send the message converted into the text to another subscriber identity module card bound to user A.

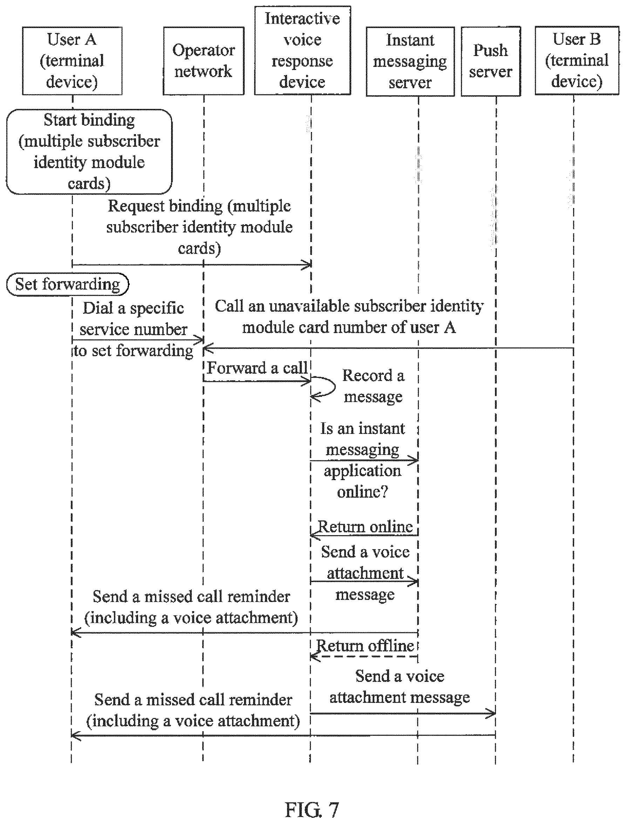

As shown in FIG. 7, another scenario shows another manner of missed call reminding when an instant messaging application and a push application exist on the user's terminal device and the operator can provide an instant messaging service and a push service correspondingly.

User A uses an account binding unit on a terminal to perform user account binding (bind multiple user accounts to one terminal device identifier).

The account binding unit is linked to an interactive voice response device to complete the binding between the user account and the device.

User A uses a forwarding setting unit on the terminal to set call forwarding. The forwarding setting unit dials a specific service number of an operator to set forwarding of a call to a service number corresponding to the interactive voice response device.

In time of call forwarding, user B dials a mobile phone of user A, and, according to the call forwarding setting of user A, the operator forwards the call from user B to the interactive voice response device, and a voice recording unit of the interactive voice response device records a voice message of user B.

By querying the information about the binding between the user account and the terminal device, an account mapping unit of the interactive voice response device obtains an identity of user A and corresponding terminal mapping information.

A message sending unit of the interactive voice response device selects a channel for sending a reminder to the user's mobile phone. The message sending unit of the interactive voice response device selects a sending manner according to an online state of the instant messaging application of the terminal of user A:
1. If an instant messaging client of user A is online, a voice file of the message is used as a multimedia attachment, and an instant messaging message that includes a missed call reminder is sent to the instant messaging client of the user.
2. If the instant messaging client of user A is offline, a push message of a missed call reminder is sent to the user by using a push service, and the missed call information is sent to the user terminal.

Of course, when the instant messaging client and the push application client are online simultaneously, either of them may be selected to send the missed call reminder to the terminal device.

This method enables the user with the terminal to obtain the missed call reminder in time when a certain subscriber identity module card on a single-card, dual-card, or multi-card mobile phone terminal is removed and unavailable and when an entity subscriber identity module card is unavailable (a data channel is available) in a mobile phone with a virtual card in a roaming state.

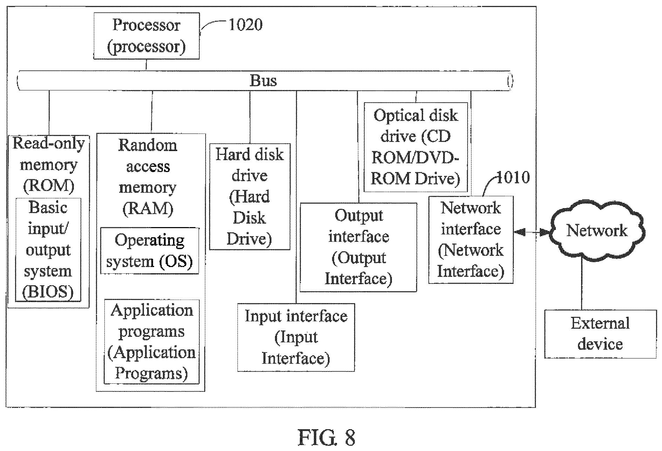

As shown in FIG. 8, similar to an existing computer, the interactive voice response device 1000 described in the present invention exchanges information with an external device through a network interface 1010, for example, receives an account binding request sent by the terminal device, sends information to a network-side service server, and the like; the interactive voice response device 1000 uses a processor 1020 to process information from the external device, for example, creates a relationship mapping table between a corresponding user account and a terminal device according to the account binding request sent by the terminal device, and obtains a bound terminal device identifier from the relationship mapping table according to the called user account when the call is forwarded.

A person of ordinary skill in the art understands that each aspect of the present invention or any possible implementation manner of each aspect may be implemented in the form of a system, a method, or a computer program product. Therefore, each aspect of the present invention or any possible implementation manner of each aspect may take the form of an all hardware embodiment, the form of an all software embodiment (including firmware, residing software, and on the like), or the form of a combination of software and hardware embodiments, which are uniformly referred to as a "circuit", a "module" or a "system" herein. Furthermore, each aspect of the present invention or any possible implementation manner of each aspect may take the form of a computer program product, where the computer program product refers to computer-readable program codes stored on a computer-readable medium.

The computer-readable medium may be a computer-readable signal medium or a computer-readable storage medium. The computer-readable storage medium includes but is not limited to electronic, magnetic, optical, electromagnetic, infrared, or semiconductor systems, devices or apparatuses, or any appropriate combination thereof, such as a random access memory (RAM), a read only memory (ROM), an erasable programmable read-only memory (EPROM or flash memory), an optical fiber, and a portable read-only memory (CD-ROM).

A processor in the computer reads computer-readable program codes stored in the computer-readable medium, so that the processor can perform function actions specified in each step in the flowchart or in a combination of the steps, and an apparatus for performing function actions specified in each block of the block diagram or in a combination of the blocks can be generated.

The computer-readable program codes may be fully executed on a computer of a user, or partly executed on the computer of the user, or executed as a separate software package, or partly executed on the computer of the user and partly executed on a remote computer, or fully executed on a remote computer or server. It should also be noted that in some alternative implementation solutions, the steps in the flowchart or the functions specified in each block of the block diagram may occur in a different sequence other than that specified in the diagram. For example, depending on the functions involved, two steps shown successively or two blocks may be actually executed almost at the same time, or the blocks may sometimes be executed in a reverse sequence.

Apparently, a person skilled in the art may make modifications and variations to the invention without departing from the spirit and scope of the invention. In this way, the invention is intended to cover the modifications and variations provided that they fall within the scope of protection defined by the following claims or their equivalents.

### Industrial Applicability

The present invention discloses a terminal device, an interactive voice response device, and a missed call reminding system and method, and relates to the field of computer and communications technologies. In the embodiments of the present invention, all user accounts that use a terminal device in an interactive voice response device are bound to the terminal device, and, based on an operator's call forwarding service, experience of a missed call reminding service that is previously not accomplishable by the operator is provided for a terminal user, and missed calls can be sent to the terminal device in time when a certain subscriber identity module card of the user is unavailable, which enables the user to obtain better experience of missed call reminding. Therefore, the present invention is industrially applicable.

## Claims

1. A terminal device, comprising:
an account binding unit (110), configured to send an account binding request to an interactive voice response device, wherein the account binding request is a request for binding all user accounts that use the terminal device to the terminal device, so as to enable the interactive voice response device to record information about the binding between all user accounts that use the terminal and the terminal device wherein the binding between the user account and the terminal device includes a mapping relationship between the subscriber identity module card number corresponding to the user account and the terminal device identifier;
a forwarding setting unit (120), configured to bind configuration information for missed call forwarding of a first one of the user accounts onto a preset service number of the interactive voice response device; and
a missed call receiving unit (130), configured to receive a missed call reminder sent by the interactive voice response device according to the information about the binding,
wherein the missed call reminder is a reminder of a missed call to the first user account, wherein the missed call receiving unit (130) is a user identity recognizing unit which receives the missed call reminder that is sent by using a second user account of said all user accounts and related to the first user account.

2. The terminal device according to claim 1, wherein the missed call receiving unit (130) comprises a user identity recognizing unit, configured to receive missed call reminders that are sent by the interactive voice response device to other user accounts except the called user account in the terminal device by using a short message gateway.

3. The terminal device according to claim 1,
wherein the information about the binding between the user account and the terminal device further comprises at least either of a mapping relationship between the terminal device identifier and an instant messaging application and a mapping relationship between the terminal device identifier and a push service;
wherein the missed call receiving unit comprises an instant messaging application unit, configured to receive a missed call reminder that is sent by the interactive voice response device to the terminal device by using an instant messaging server; or, wherein the missed call receiving unit comprises a push application unit, configured to receive a missed call reminder that is sent by the interactive voice response device to the terminal device by using a push server.

4. The terminal device according to any one of claims 1 to 3, wherein the forwarding setting unit binds the configuration information for missed call forwarding of the user account onto a preset service number of the interactive voice response device by dialing a specific service of an operator.

5. An interactive voice response device (330), comprising:
an account mapping unit, configured to record information about binding between all user accounts that use a terminal device (310) and the terminal device (310), and further configured to obtain, according to the information about the binding, a terminal device identifier bound to a called user account which is a first one of said all user accounts wherein the binding between the user account and the terminal device includes a mapping relationship between the subscriber identity module card number corresponding to the user account and the terminal device identifier; and
a message sending unit, configured to send call information as a missed call reminder to a terminal device corresponding to the terminal device identifier using a second user account of said all user accounts wherein the missed call reminder is related to the first user account.

6. The interactive voice response device (330) according to claim 5, wherein the message sending unit comprises:
a short message gateway interface unit, configured to use the short message gateway to send the call information to other user accounts bound to the terminal device except the called account in the terminal device (310).

7. The interactive voice response device (330) according to claim 5, wherein the information about the binding between the user account and the terminal device (310) further comprises at least either of a mapping relationship between the terminal device (310) and an instant messaging application and a mapping relationship between the terminal device and a push service;
wherein the message sending unit comprises: an instant messaging interface unit, configured to use an instant messaging server to send the call information to an instant messaging application in the terminal device; or,
wherein the message sending unit comprises: a push service interface unit, configured to use a push server to send the call information to a push application in the terminal device.

8. The interactive voice response device according to any one of claims 5 to 7, wherein the interactive voice response device further comprises a voice recording unit and a voice converting unit; the voice recording unit is configured to record a voice message that is left in time of calling; the voice converting unit is configured to convert the voice message into text information; and the message sending unit sends at least either of the voice message and the text information together with the call information as a missed call reminder to the terminal device bound to the called user account.

9. A missed call reminding system, comprising a service server (320), a terminal device (310) specified in any one of claims 1 to 4, and an interactive voice response device (330) specified in any one of claims 5 to 8, wherein the terminal device (310) and the interactive voice response device (330) are connected to the service server over an operator network.

10. The missed call reminding system according to claim 9, wherein the service server comprises a short message gateway, an instant messaging server, and a push server.

11. A missed call reminding method, comprising steps:
sending (S410), by a terminal device, an account binding request to an interactive voice response device, wherein the account binding request is a request for binding all user accounts that use the terminal device to the terminal device, so as to enable the interactive voice response device to record information about the binding between the user account and the terminal device wherein the binding between the user account and the terminal device includes a mapping relationship between the subscriber identity module card number corresponding to the user account and the terminal device identifier;
binding (S420), by the terminal device, configuration information for missed call forwarding of a first one of said all user accounts that use the terminal device onto a preset service number of the interactive voice response device; and
receiving, by the terminal device, a missed call reminder sent by the interactive voice response device according to the information about the binding using a second user account of said all user accounts, wherein the missed call reminder is a reminder of a missed call to the first user account.

12. The missed call reminding method according to claim 11, wherein the information about the binding between the user account and the terminal device (310) comprises mapping relationships between all user accounts that use the terminal device (310) and a terminal device identifier;
wherein the receiving, by the terminal device (310), a missed call reminder sent by the interactive voice response device according to the information about the binding,
wherein the missed call reminder is a reminder of a missed call to the user account, specifically comprises: receiving missed call reminders that are sent by the interactive voice response device (330) to other user accounts except the called user account in the terminal device by using a short message gateway.

13. The missed call reminding method according to claim 12, wherein the information about the binding between the user account and the terminal device (310) further comprises at least either of a mapping relationship between the terminal device identifier and an instant messaging application and a mapping relationship between the terminal device identifier and a push service;
wherein the receiving, by the terminal device (310), a missed call reminder sent by the interactive voice response device (330) according to the information about the binding,
wherein the missed call reminder is a reminder of a missed call to the user account, specifically comprises: receiving, by an instant messaging application in the terminal device, a missed call reminder that is sent by the interactive voice response device (320) to the terminal device (310) by using an instant messaging server; or,
wherein the receiving, by the terminal device (310), a missed call reminder sent by the interactive voice response device (330) according to the information about the binding, wherein the missed call reminder is a reminder of a missed call to the user account, specifically comprises: receiving, by a push application in the terminal device (310), a missed call reminder that is sent by the interactive voice response device (330) to the terminal device (310) by using a push server.

14. A missed call reminding method, comprising steps:
recording (S510), by an interactive voice response device (330), information about binding between all user accounts that use a terminal device and the terminal device, and obtaining, according to the information about the binding, a terminal device identifier bound to a called user account which is a first one of said all user accounts wherein the binding between the user account and the terminal device includes a mapping relationship between the subscriber identity module card number corresponding to the user account and the terminal device identifier; and
sending (S520), by the interactive voice response device, call information as a missed call reminder related to the first user account to a terminal device corresponding to the terminal device identifier by using a second user account of said all user accounts.

15. The missed call reminding method according to claim 14, wherein the information about the binding between the user account and the terminal device (310) comprises mapping relationships between all user accounts that use the terminal device (310) and the terminal device identifier;
wherein the sending (S520), by the interactive voice response device (330), call information as a missed call reminder to a terminal device (310) corresponding to the terminal device identifier, specifically comprises: using a short message gateway to send the call information to other user accounts bound to the terminal device (310)except the called account in the terminal device (310).

16. The missed call reminding method according to claim 15, wherein the information about the binding between the user account and the terminal device (310) further comprises at least either of a mapping relationship between the terminal device (310) and an instant messaging application and a mapping relationship between the terminal device and a push service;
wherein the sending (S520), by the interactive voice response device (330), call information as a missed call reminder to a terminal device (310) corresponding to the terminal device identifier, specifically comprises: using an instant messaging server to send the call information to an instant messaging application in the terminal device (310); or,
wherein the sending (S520), by the interactive voice response device (330), call information as a missed call reminder to a terminal device (310) corresponding to the terminal device identifier, specifically comprises: using a push server to send the call information to a push application in the terminal device (310).

17. The missed call reminding method according to any one of claims 14 to 16, wherein:
before the sending (S520), by the interactive voice response device (330), call information as a missed call reminder to a terminal device (310) bound to the called user account, the method further comprises: recording a voice message that is left in time of calling, and converting the voice message into text information; and, in time of sending, sending at least either of the voice message and the text information together with the call information as a missed call reminder to the terminal device bound to the called user account.

## Patentansprüche

1. Endgerät, das Folgendes umfasst:
eine Konto-Bindeeinheit (110), die dazu ausgelegt ist, eine Konto-Bindeanforderung zu einer interaktiven Sprachausgabevorrichtung zu senden, wobei die Konto-Bindeanforderung eine Anforderung ist, um alle Benutzerkonten, die das Endgerät nutzen, an das Endgerät zu binden, um die interaktive Sprachausgabevorrichtung zu befähigen, Informationen über die Bindung zwischen allen Benutzerkonten, die das Terminal und das Endgerät nutzen, aufzuzeichnen, wobei die Bindung zwischen dem Benutzerkonto und dem Endgerät eine Zuordnungsbeziehung zwischen der dem Benutzerkonto entsprechenden SIM-Kartennummer und der Endgerätekennung einschließt;
eine Weiterleitungs-Einstellungseinheit (120), die dazu ausgelegt ist, Konfigurationsinformationen für die Weiterleitung von verpassten Anrufen eines ersten der Benutzerkonten an eine voreingestellte Servicenummer der interaktiven Sprachausgabevorrichtung zu binden; und
eine Empfangseinheit für verpasste Anrufe (130), die dazu ausgelegt ist, eine Erinnerung für verpasste Anrufe zu empfangen, die von der interaktiven Sprachausgabevorrichtung gemäß den Informationen über die Bindung gesendet wird,
wobei die Erinnerung für verpasste Anrufe eine Erinnerung eines verpassten Anrufs an das erste Benutzerkonto ist, wobei die Empfangseinheit für verpasste Anrufe (130) eine Benutzeridentitäts-Erkennungseinheit ist, welche die Erinnerung für verpasste Anrufe empfängt, die durch Benutzen eines zweiten Benutzerkontos aller Benutzerkonten gesendet wird und mit dem ersten Benutzerkonto verbunden ist.

2. Endgerät gemäß Anspruch 1, wobei die Empfangseinheit für verpasste Anrufe (130) eine Benutzeridentitäts-Erkennungseinheit umfasst, die dazu ausgelegt ist, Erinnerungen für verpasste Anrufe zu empfangen, die durch Verwenden eines Kurznachricht-Gateways von der interaktiven Sprachausgabevorrichtung zu anderen Benutzerkonten außer dem angerufenen Benutzerkonto in dem Endgerät gesendet werden.

3. Endgerät gemäß Anspruch 1,
wobei die Informationen über die Bindung zwischen dem Benutzerkonto und dem Endgerät ferner mindestens eine einer Zuordnungsbeziehung zwischen der Endgerätekennung und einer Instant Messaging-Anwendung sowie einer Zuordnungsbeziehung zwischen der Endgerätekennung und einem Push-Service umfassen;
wobei die Empfangseinheit für verpasste Anrufe eine Instant Messaging-Anwendungseinheit umfasst, die dazu ausgelegt ist, eine Erinnerung für verpasste Anrufe zu empfangen, die von der interaktiven Sprachausgabevorrichtung durch Verwenden eines Instant Messaging-Servers zu dem Endgerät gesendet wird; oder, wobei die Empfangseinheit für verpasste Anrufe eine Push-Anwendungseinheit umfasst, die dazu ausgelegt ist, eine Erinnerung für verpasste Anrufe zu empfangen, die von der interaktiven Sprachausgabevorrichtung durch Verwenden eines Push-Servers zu dem Endgerät gesendet wird.

4. Endgerät gemäß einem der Ansprüche 1 bis 3, wobei die Weiterleitungs-Einstellungseinheit die Konfigurationsinformationen für Weiterleitung von verpassten Anrufen des Benutzerkontos durch Wählen eines speziellen Dienstes einer Vermittlung an eine voreingestellte Servicenummer der interaktiven Sprachausgabevorrichtung bindet.

5. Interaktive Sprachausgabevorrichtung (330), die Folgendes umfasst:
eine Konto-Zuordnungseinheit, die dazu ausgelegt ist, Informationen über die Bindung zwischen allen Benutzerkonten, die ein Endgerät (310) nutzen, und dem Endgerät (310) aufzuzeichnen, und die ferner dazu ausgelegt ist, gemäß den Informationen über die Bindung eine Endgerätekennung zu erhalten, die an ein angerufenes Benutzerkonto gebunden ist, das ein erstes aller Benutzerkonten ist, wobei die Bindung zwischen dem Benutzerkonto und dem Endgerät eine Zuordnungsbeziehung zwischen der dem Benutzerkonto entsprechenden SIM-Kartennummer und der Endgerätekennung einschließt; und
eine Nachrichten-Sendeeinheit, die dazu ausgelegt ist, Anrufinformationen als eine Erinnerung für verpasste Anrufe zu einem Endgerät zu senden, das der Endgerätekennung entspricht, indem ein zweites Benutzerkonto aller Benutzerkonten verwendet wird, wobei die Erinnerung für verpasste Anrufe mit dem ersten Benutzerkonto verbunden ist.

6. Interaktive Sprachausgabevorrichtung (330) gemäß Anspruch 5, wobei die Nachrichten-Sendeeinheit Folgendes umfasst:
eine Kurznachricht-Gateway-Schnittstelleneinheit, die dazu ausgelegt ist, das Kurznachricht-Gateway zu nutzen, um die Anrufinformationen zu anderen Benutzerkonten, die an das Endgerät gebunden sind, außer dem angerufenen Konto in dem Endgerät (310), zu senden.

7. Interaktive Sprachausgabevorrichtung (330) gemäß Anspruch 5, wobei die Informationen über die Bindung zwischen dem Benutzerkonto und dem Endgerät (310) ferner mindestens eine einer Zuordnungsbeziehung zwischen dem Endgerät (310) und einer Instant Messaging-Anwendung sowie einer Zuordnungsbeziehung zwischen dem Endgerät und einem Push-Service umfassen;
wobei die Nachrichten-Sendeeinheit Folgendes umfasst:
eine Instant Messaging-Schnittstelleneinheit, die dazu ausgelegt ist, einen Instant Messaging-Server zu nutzen, um die Anrufinformationen zu einer Instant Messaging-Anwendung in dem Endgerät zu senden; oder,
wobei die Nachrichten-Sendeeinheit Folgendes umfasst:
eine Push-Service-Schnittstelleneinheit, die dazu ausgelegt ist, einen Push-Server zu nutzen, um die Anrufinformationen zu einer Push-Anwendung in dem Endgerät zu senden.

8. Interaktive Sprachausgabevorrichtung gemäß einem der Ansprüche 5 bis 7, wobei die interaktive Sprachausgabevorrichtung ferner eine Sprachaufzeichnungseinheit und eine Sprachumwandlungseinheit umfasst; die Sprachaufzeichnungseinheit dazu ausgelegt ist, eine Sprachnachricht aufzuzeichnen, die in der Anrufzeit hinterlassen wird; die Sprachumwandlungseinheit dazu ausgelegt ist, die Sprachnachricht in Textinformationen umzuwandeln; und die Nachrichten-Sendeeinheit mindestens eine der Sprachnachricht und der Textinformationen zusammen mit den Anrufinformationen als eine Erinnerung für verpasste Anrufe zu dem Endgerät sendet, das an das angerufene Benutzerkonto gebunden ist.

9. Erinnerungssystem für verpasste Anrufe, das einen Dienstserver (320), ein in einem beliebigen der Ansprüche 1 bis 4 angegebenes Endgerät (310) und eine in einem beliebigen der Ansprüche 5 bis 8 angegebene interaktive Sprachausgabevorrichtung (330) umfasst, wobei das Endgerät (310) und die interaktive Sprachausgabevorrichtung (330) über ein Vermittlungsnetzwerk mit dem Dienstserver verbunden sind.

10. Erinnerungssystem für verpasste Anrufe gemäß Anspruch 9, wobei der Dienstserver ein Kurznachricht-Gateway, einen Instant Messaging-Server und einen Push-Server umfasst.

11. Erinnerungsverfahren für verpasste Anrufe, das folgende Schritte umfasst:
Senden (S410), durch ein Endgerät, einer Konto-Bindeanforderung zu einer interaktiven Sprachausgabevorrichtung, wobei die Konto-Bindeanforderung eine Anforderung ist, um alle Benutzerkonten, die das Endgerät nutzen, an das Endgerät zu binden, um die interaktive Sprachausgabevorrichtung zu befähigen, Informationen über die Bindung zwischen dem Benutzerkonto und dem Endgerät aufzuzeichnen, wobei die Bindung zwischen dem Benutzerkonto und dem Endgerät eine Zuordnungsbeziehung zwischen der dem Benutzerkonto entsprechenden SIM-Kartennummer und der Endgerätekennung einschließt;
Binden (S420), durch das Endgerät, von Konfigurationsinformationen für die Weiterleitung von verpassten Anrufen eines ersten aller Benutzerkonten, die das Endgerät nutzen, an eine voreingestellte Servicenummer der interaktiven Sprachausgabevorrichtung; und
Empfangen, durch das Endgerät, einer durch die interaktive Sprachausgabevorrichtung gesendeten Erinnerung für verpasste Anrufe gemäß den Informationen über die Bindung unter Verwendung eines zweiten Benutzerkontos aller Benutzerkonten, wobei die Erinnerung für verpasste Anrufe eine Erinnerung eines verpassten Anrufs zu dem ersten Benutzerkonto ist.

12. Erinnerungsverfahren für verpasste Anrufe gemäß Anspruch 11, wobei die Informationen über die Bindung zwischen dem Benutzerkonto und dem Endgerät (310) Zuordnungsbeziehungen zwischen allen Benutzerkonten, die das Endgerät (310) nutzen, und einer Endgerätekennung umfassen;
wobei das Empfangen, durch das Endgerät (310), einer durch die interaktive Sprachausgabevorrichtung gesendeten Erinnerung für verpasste Anrufe gemäß den Informationen über die Bindung, wobei die Erinnerung für verpasste Anrufe eine Erinnerung eines verpassten Anrufs an das Benutzerkonto ist, speziell Folgendes umfasst:
Empfangen von Erinnerungen für verpasste Anrufe, die durch die interaktive Sprachausgabevorrichtung (330) zu anderen Benutzerkonten außer dem angerufenen Benutzerkonto in dem Endgerät durch Verwenden eines Kurznachricht-Gateways gesendet werden.

13. Erinnerungsverfahren für verpasste Anrufe gemäß Anspruch 12, wobei die Informationen über die Bindung zwischen dem Benutzerkonto und dem Endgerät (310) ferner mindestens eine einer Zuordnungsbeziehung zwischen der Endgerätekennung und einer Instant Messaging-Anwendung sowie einer Zuordnungsbeziehung zwischen der Endgerätekennung und einem Push-Service umfassen;
wobei das Empfangen, durch das Endgerät (310), einer durch die interaktive Sprachausgabevorrichtung (330) gesendeten Erinnerung für verpasste Anrufe gemäß den Informationen über die Bindung, wobei die Erinnerung für verpasste Anrufe eine Erinnerung eines verpassten Anrufs an das Benutzerkonto ist, speziell Folgendes umfasst:
Empfangen, durch eine Instant Messaging-Anwendung in dem Endgerät, einer Erinnerung für verpasste Anrufe, die von der interaktiven Sprachausgabevorrichtung (320) durch Verwenden eines Instant Messaging-Servers zu dem Endgerät (310) gesendet wird; oder,
wobei das Empfangen, durch das Endgerät (310), einer von der interaktiven Sprachausgabevorrichtung (330) gemäß den Informationen über die Bindung gesendeten Erinnerung für verpasste Anrufe,
wobei die Erinnerung für verpasste Anrufe eine Erinnerung eines verpassten Anrufs an das Benutzerkonto ist, speziell Folgendes umfasst:
Empfangen, durch eine Push-Anwendung in dem (310) Endgerät, einer Erinnerung für verpasste Anrufe, die von der interaktiven Sprachausgabevorrichtung (330) durch Verwenden eines Push-Servers zu dem Endgerät (310) gesendet wird.

14. Erinnerungsverfahren für verpasste Anrufe, das folgende Schritte umfasst:
Aufzeichnen (S510), durch eine interaktive Sprachausgabevorrichtung (330), von Informationen über die Bindung zwischen allen Benutzerkonten, die ein Endgerät nutzen, und dem Endgerät, und Erhalten, gemäß den Informationen über die Bindung, einer Endgerätekennung, die an ein angerufenes Benutzerkonto gebunden ist, das ein erstes aller Benutzerkonten ist, wobei die Bindung zwischen dem Benutzerkonto und dem Endgerät eine Zuordnungsbeziehung zwischen der dem Benutzerkonto entsprechenden SIM-Kartennummer und der Endgerätekennung einschließt; und
Senden (S520), durch die interaktive Sprachausgabevorrichtung, von Anrufinformationen als eine Erinnerung für verpasste Anrufe, die mit dem ersten Benutzerkonto verbunden ist, zu einem Endgerät, das der Endgerätekennung entspricht, durch Verwenden eines zweiten Benutzerkontos aller Benutzerkonten.

15. Erinnerungsverfahren für verpasste Anrufe gemäß Anspruch 14, wobei die Informationen über die Bindung zwischen dem Benutzerkonto und dem Endgerät (310) Zuordnungsbeziehungen zwischen allen Benutzerkonten, die das Endgerät (310) nutzen, und der Endgerätekennung umfassen;
wobei das Senden (S520), durch die interaktive Sprachausgabevorrichtung (330), von Anrufinformationen als eine Erinnerung für verpasste Anrufe zu einem Endgerät (310), das der Endgerätekennung entspricht, speziell Folgendes umfasst:
Verwenden eines Kurznachricht-Gateways, um die Anrufinformationen zu anderen Benutzerkonten zu senden, die an das Endgerät (310) gebunden sind, außer dem angerufenen Konto in dem Endgerät (310).

16. Erinnerungsverfahren für verpasste Anrufe gemäß Anspruch 15, wobei die Informationen über die Bindung zwischen dem Benutzerkonto und dem Endgerät (310) ferner mindestens eine einer Zuordnungsbeziehung zwischen dem Endgerät (310) und einer Instant Messaging-Anwendung sowie einer Zuordnungsbeziehung zwischen dem Endgerät und einem Push-Service umfassen;
wobei das Senden (S520), durch die interaktive Sprachausgabevorrichtung (330), von Anrufinformationen als eine Erinnerung für verpasste Anrufe zu einem Endgerät (310), das der Endgerätekennung entspricht, speziell Folgendes umfasst:
Verwenden eines Instant Messaging-Servers, um die Anrufinformationen zu einer Instant Messaging-Anwendung in dem Endgerät (310) zu senden; oder,
wobei das Senden (S520), durch die interaktive Sprachausgabevorrichtung (330), von Anrufinformationen als eine Erinnerung für verpasste Anrufe zu einem Endgerät (310), das der Endgerätekennung entspricht, speziell Folgendes umfasst:
Verwenden eines Push-Servers, um die Anrufinformationen zu einer Push-Anwendung in dem Endgerät (310) zu senden.

17. Erinnerungsverfahren für verpasste Anrufe gemäß einem der Ansprüche 14 bis 16, wobei:
das Verfahren vor dem Senden (S520), durch die interaktive Sprachausgabevorrichtung (330), von Anrufinformationen als eine Erinnerung für verpasste Anrufe zu einem Endgerät (310), das an das angerufene Benutzerkonto gebunden ist, ferner Folgendes umfasst:
Aufzeichnen einer Sprachnachricht, die in der Anrufzeit hinterlassen wird, und Umwandeln der Sprachnachricht in Textinformationen; und, in der Sendezeit, Senden von mindestens einer der Sprachnachricht und der Textinformationen zusammen mit den Anrufinformationen als eine Erinnerung für verpasste Anrufe an das Endgerät, das an das angerufene Benutzerkonto gebunden ist.

## Revendications

1. Dispositif de terminal, comprenant :
une unité de liaison de compte (110), configurée pour envoyer une demande de liaison de compte à un dispositif de réponse vocale interactive, dans lequel la demande de liaison de compte est une demande pour lier la totalité des comptes d'utilisateur qui utilisent le dispositif de terminal au dispositif de terminal, afin de permettre au dispositif de réponse vocale interactive d'enregistrer des informations concernant la liaison entre la totalité des comptes d'utilisateur qui utilisent le terminal et le dispositif de terminal dans lequel la liaison entre le compte d'utilisateur et le dispositif de terminal inclut une relation de mise en correspondance entre le numéro de carte de module d'identité d'abonné correspondant au compte d'utilisateur et l'identifiant de dispositif de terminal ;
une unité de réglage de réacheminement (120), configurée pour lier des informations de configuration pour le réacheminement d'appel en absence d'un premier des comptes d'utilisateur sur un numéro de service préréglé du dispositif de réponse vocale interactive ; et
une unité de réception d'appel en absence (130), configurée pour recevoir un rappel d'appel en absence envoyé par le dispositif de réponse vocale interactive selon les informations concernant la liaison, dans lequel le rappel d'appel en absence est un rappel d'un appel en absence au premier compte d'utilisateur, dans lequel l'unité de réception d'appel en absence (130) est une unité de reconnaissance d'identité d'utilisateur qui reçoit le rappel d'appel en absence qui est envoyé en utilisant un second compte d'utilisateur de ladite totalité des comptes d'utilisateur et connexe au premier compte d'utilisateur.

2. Dispositif de terminal selon la revendication 1, dans lequel l'unité de réception d'appel en absence (130) comprend une unité de reconnaissance d'identité d'utilisateur, configurée pour recevoir des rappels d'appel en absence qui sont envoyés par le dispositif de réponse vocale interactive à d'autres comptes d'utilisateur, à l'exception du compte d'utilisateur appelé dans le dispositif de terminal, en utilisant une passerelle de minimessage.

3. Dispositif de terminal selon la revendication 1,
dans lequel les informations concernant la liaison entre le compte d'utilisateur et le dispositif de terminal comprennent en outre au moins l'une ou l'autre d'une relation de mise en correspondance entre l'identifiant de dispositif de terminal et une application de messagerie instantanée et d'une relation de mise en correspondance entre l'identifiant de dispositif de terminal et un service de pousser ;
dans lequel l'unité de réception d'appel en absence comprend une unité d'application de messagerie instantanée, configurée pour recevoir un rappel d'appel en absence qui est envoyé par le dispositif de réponse vocale interactive au dispositif de terminal en utilisant un serveur de messagerie instantanée ; ou,
dans lequel l'unité de réception d'appel en absence comprend une unité d'application de pousser, configurée pour recevoir un rappel d'appel en absence qui est envoyé par le dispositif de réponse vocale interactive au dispositif de terminal en utilisant un serveur de pousser.

4. Dispositif de terminal selon l'une quelconque des revendications 1 à 3, dans lequel l'unité de réglage de réacheminement lie les informations de configuration pour le réacheminement d'appel en absence du compte d'utilisateur sur un numéro de service préréglé du dispositif de réponse vocale interactive en numérotant un service spécifique d'un opérateur.

5. Dispositif de réponse vocale interactive (330), comprenant :
une unité de mise en correspondance de compte, configurée pour enregistrer des informations concernant une liaison entre la totalité des comptes d'utilisateur qui utilisent un dispositif de terminal (310) et le dispositif de terminal (310), et en outre configurée pour obtenir, selon les informations concernant la liaison, un identifiant de dispositif de terminal lié à un compte d'utilisateur appelé qui est un premier de ladite totalité des comptes d'utilisateur dans lequel la liaison entre le compte d'utilisateur et le dispositif de terminal inclut une relation de mise en correspondance entre le numéro de carte de module d'identité d'abonné correspondant au compte d'utilisateur et l'identifiant de dispositif de terminal ; et
une unité d'envoi de message, configurée pour envoyer des informations d'appel sous forme de rappel d'appel en absence à un dispositif de terminal correspondant à l'identifiant de dispositif de terminal en utilisant un second compte d'utilisateur de ladite totalité des comptes d'utilisateur, dans lequel le rappel d'appel en absence est connexe au premier compte d'utilisateur.

6. Dispositif de réponse vocale interactive (330) selon la revendication 5, dans lequel l'unité d'envoi de message comprend :
une unité d'interface de passerelle de minimessage, configurée pour utiliser la passerelle de minimessage pour envoyer les informations d'appel à d'autres comptes d'utilisateur liés au dispositif de terminal, à l'exception du compte appelé dans le dispositif de terminal (310).

7. Dispositif de réponse vocale interactive (330) selon la revendication 5, dans lequel les informations concernant la liaison entre le compte d'utilisateur et le dispositif de terminal (310) comprennent en outre au moins l'une ou l'autre d'une relation de mise en correspondance entre le dispositif de terminal (310) et une application de messagerie instantanée et d'une relation de mise en correspondance entre le dispositif de terminal et un service de pousser ;
dans lequel l'unité d'envoi de message comprend : une unité d'interface de messagerie instantanée, configurée pour utiliser un serveur de messagerie instantanée pour envoyer les informations d'appel à une application de messagerie instantanée dans le dispositif de terminal ; ou,
dans lequel l'unité d'envoi de message comprend : une unité d'interface de service de pousser, configurée pour utiliser un serveur de pousser pour envoyer les informations d'appel à une application de pousser dans le dispositif de terminal.

8. Dispositif de réponse vocale interactive selon l'une quelconque des revendications 5 à 7, le dispositif de réponse vocale interactive comprenant en outre une unité d'enregistrement vocal et une unité de conversion vocale ; l'unité d'enregistrement vocal étant configurée pour enregistrer un message vocal qui est laissé au moment de l'appel ; l'unité de conversion vocale étant configurée pour convertir le message vocal en informations textuelles ; et l'unité d'envoi de message envoyant au moins l'un ou l'autre du message vocal ou des informations textuelles conjointement avec les informations d'appel sous forme de rappel d'appel en absence au dispositif de terminal lié au compte d'utilisateur appelé.

9. Système de rappel d'appel en absence, comprenant un serveur de service (320), un dispositif de terminal (310) spécifié dans l'une quelconque des revendications 1 à 4, et un dispositif de réponse vocale interactive (330) spécifié dans l'une quelconque des revendications 5 à 8, dans lequel le dispositif de terminal (310) et le dispositif de réponse vocale interactive (330) sont connectés au serveur de service par l'intermédiaire d'un réseau d'opérateur.

10. Système de rappel d'appel en absence selon la revendication 9, dans lequel le serveur de service comprend une passerelle de minimessage, un serveur de messagerie instantanée, et un serveur de pousser.

11. Procédé de rappel d'appel en absence, comprenant les étapes suivantes :
l'envoi (S410), par un dispositif de terminal, d'une demande de liaison de compte à un dispositif de réponse vocale interactive, dans lequel la demande de liaison de compte est une demande pour lier la totalité des comptes d'utilisateur qui utilisent le dispositif de terminal au dispositif de terminal, afin de permettre au dispositif de réponse vocale interactive d'enregistrer des informations concernant la liaison entre le compte d'utilisateur et le dispositif de terminal, dans lequel la liaison entre le compte d'utilisateur et le dispositif de terminal inclut une relation de mise en correspondance entre le numéro de carte de module d'identité d'abonné correspondant au compte d'utilisateur et l'identifiant de dispositif de terminal ;
la liaison (S420), par le dispositif de terminal, d'informations de configuration pour le réacheminement d'appel en absence d'un premier de ladite totalité des comptes d'utilisateur qui utilisent le dispositif de terminal sur un numéro de service préréglé du dispositif de réponse vocale interactive ; et
la réception, par le dispositif de terminal, d'un rappel d'appel en absence envoyé par le dispositif de réponse vocale interactive selon les informations concernant la liaison en utilisant un second compte d'utilisateur de ladite totalité des comptes d'utilisateur, dans lequel le rappel d'appel en absence est un rappel d'un appel en absence au premier compte d'utilisateur.

12. Procédé de rappel d'appel en absence selon la revendication 11, dans lequel les informations concernant la liaison entre le compte d'utilisateur et le dispositif de terminal (310) comprennent une relation de mise en correspondance entre la totalité des comptes d'utilisateur qui utilisent le dispositif de terminal (310) et un identifiant de dispositif de terminal ;
dans lequel la réception, par le dispositif de terminal (310), d'un rappel d'appel en absence envoyé par le dispositif de réponse vocale interactive selon les informations concernant la liaison, dans lequel le rappel d'appel en absence est un rappel d'un appel en absence au compte d'utilisateur, comprend spécifiquement : la réception de rappels d'appel en absence qui sont envoyés par le dispositif de réponse vocale interactive (330) à d'autres comptes d'utilisateur à l'exception du compte d'utilisateur appelé dans le dispositif de terminal en utilisant une passerelle de minimessage.

13. Procédé de rappel d'appel en absence selon la revendication 12, dans lequel les informations concernant la liaison entre le compte d'utilisateur et le dispositif de terminal (310) comprennent en outre au moins l'une ou l'autre d'une relation de mise en correspondance entre l'identifiant de dispositif de terminal et une application de messagerie instantanée et d'une relation de mise en correspondance entre l'identifiant de dispositif de terminal et un service de pousser ;
dans lequel la réception, par le dispositif de terminal (310), d'un rappel d'appel en absence envoyé par le dispositif de réponse vocale interactive (330) selon les informations concernant la liaison, dans lequel le rappel d'appel en absence est un rappel d'un appel en absence au compte d'utilisateur, comprend spécifiquement : la réception, par une application de messagerie instantanée dans le dispositif de terminal, d'un rappel d'appel en absence qui est envoyé par le dispositif de réponse vocale interactive (320) au dispositif de terminal (310) en utilisant un serveur de messagerie instantanée ; ou,
dans lequel la réception, par le dispositif de terminal (310), d'un rappel d'appel en absence envoyé par le dispositif de réponse vocale interactive (330) selon les informations concernant la liaison, dans lequel le rappel d'appel en absence est un rappel d'un appel en absence au compte d'utilisateur, comprend spécifiquement : la réception, par une application de pousser dans le dispositif de terminal (310), d'un rappel d'appel en absence qui est envoyé par le dispositif de réponse vocale interactive (330) au dispositif de terminal (310) en utilisant un serveur de pousser.

14. Procédé de rappel d'appel en absence, comprenant les étapes suivantes :
l'enregistrement (S510), par un dispositif de réponse vocale interactive (330), d'informations concernant une liaison entre la totalité des comptes d'utilisateur qui utilisent un dispositif de terminal et le dispositif de terminal, et l'obtention, selon les informations concernant la liaison, d'un identifiant de dispositif de terminal lié à un compte d'utilisateur appelé qui est un premier de ladite totalité des comptes d'utilisateur dans lequel la liaison entre le compte d'utilisateur et le dispositif de terminal inclut une relation de mise en correspondance entre le numéro de carte de module d'identité d'abonné correspondant au compte d'utilisateur et l'identifiant de dispositif de terminal ; et
l'envoi (S520), par le dispositif de réponse vocale interactive, d'informations d'appel sous forme de rappel d'appel en absence connexe au premier compte d'utilisateur à un dispositif de terminal correspondant à l'identifiant de dispositif de terminal en utilisant un second compte d'utilisateur de ladite totalité des comptes d'utilisateur.

15. Procédé de rappel d'appel en absence selon la revendication 14, dans lequel les informations concernant la liaison entre le compte d'utilisateur et le dispositif de terminal (310) comprennent une relation de mise en correspondance entre la totalité des comptes d'utilisateur qui utilisent le dispositif de terminal (310) et l'identifiant de dispositif de terminal ;
dans lequel l'envoi (S520), par le dispositif de réponse vocale interactive (330), d'informations d'appel sous forme de rappel d'appel en absence à un dispositif de terminal (310) correspondant à l'identifiant de dispositif de terminal, comprend spécifiquement : l'utilisation d'une passerelle de minimessage pour envoyer les informations d'appel à d'autres comptes d'utilisateur liés au dispositif de terminal (310), à l'exception du compte appelé dans le dispositif de terminal (310).

16. Procédé de rappel d'appel en absence selon la revendication 15, dans lequel les informations concernant la liaison entre le compte d'utilisateur et le dispositif de terminal (310) comprennent en outre au moins l'une ou l'autre d'une relation de mise en correspondance entre le dispositif de terminal (310) et une application de messagerie instantanée et d'une relation de mise en correspondance entre le dispositif de terminal et un service de pousser ;
dans lequel l'envoi (S520), par le dispositif de réponse vocale interactive (330), d'informations d'appel sous forme de rappel d'appel en absence à un dispositif de terminal (310) correspondant à l'identifiant de dispositif de terminal, comprend spécifiquement : l'utilisation d'un serveur de messagerie instantanée pour envoyer les informations d'appel à une application de messagerie instantanée dans le dispositif de terminal (310) ; ou,
dans lequel l'envoi (S520), par le dispositif de réponse vocale interactive (330), d'informations d'appel sous forme de rappel d'appel en absence à un dispositif de terminal (310) correspondant à l'identifiant de dispositif de terminal, comprend spécifiquement : l'utilisation d'un serveur de pousser pour envoyer les informations d'appel à une application de pousser dans le dispositif de terminal (310).

17. Procédé de rappel d'appel en absence selon l'une quelconque des revendications 14 à 16 :
avant l'envoi (S520), par le dispositif de réponse vocale interactive (330), d'informations d'appel sous forme de rappel d'appel en absence à un dispositif de terminal (310) lié au compte d'utilisateur appelé, le procédé comprenant en outre : l'enregistrement d'un message vocal qui est laissé au moment de l'appel, et la conversion du message vocal en informations textuelles ; et, au moment de l'envoi, l'envoi d'au moins l'un ou l'autre du message vocal ou des informations textuelles conjointement avec les informations d'appel sous forme de rappel d'appel en absence au dispositif de terminal lié au compte d'utilisateur appelé.
